# EUROPEAN PATENT APPLICATION

(11) **EP 4 607 480 A2**
(43) Date of publication of application: **27.08.2025**
(21) Application number: 25182434.8
(22) Date of filing: 12.06.2025
(51) Int. Cl.: G06V 20/56, G06V 10/82, G06V 10/80

(54) **METHOD AND APPARATUS FOR PERCEIVING ROAD ENVIRONMENT, TRAINING METHOD AND APPARATUS, ELECTRONIC DEVICE, AUTONOMOUS DRIVING VEHICLE, STORAGE MEDIUM, AND PROGRAM PRODUCT**

(30) Priority: 16.07.2024 CN 202410954767
(71) Applicant: Beijing Baidu Netcom Science Technology Co., Ltd., Beijing 100085 (CN)
(72) Inventor: JIANG, Minyue, Beijing, 100085 (CN); YANG, Sen, Beijing, 100085 (CN); TAN, Xiao, Beijing, 100085 (CN); ZHANG, Wei, Beijing, 100085 (CN); ZHANG, Weiming, Beijing, 100085 (CN); LI, Yingying, Beijing, 100085 (CN); DING, Errui, Beijing, 100085 (CN); WANG, Jingdong, Beijing, 100085 (CN); WU, Tian, Beijing, 100085 (CN); WANG, Haifeng, Beijing, 100085 (CN)
(74) Representative: Zimmermann, Tankred Klaus

(57) **Abstract**

The present disclosure provides a method and apparatus for perceiving a road environment, a training method and apparatus, an electronic device, an autonomous driving vehicle, a storage medium, and a program product, which relate to a field of artificial intelligence technology, in particular to fields of computer vision, deep learning and large model technologies, and may be applied to scenarios such as autonomous driving and unmanned driving. The method for perceiving a road environment includes: acquiring (S210) an associated-region lane attribute and an information to be detected, where the information to be detected is collected by an onboard sensor and represents a target region where a vehicle is traveling, the associated-region lane attribute corresponds to an associated region, and the associated region and the target region meet a predetermined similarity condition; and processing (S220) the associated-region lane attribute and the information to be detected by using an onboard perception model to obtain a road perception information of the target region.

## Description

### TECHNICAL FIELD

The present disclosure relates to a field of artificial intelligence technology, in particular to fields of computer vision, deep learning and large model technologies, and may be applied to scenarios such as autonomous driving and unmanned driving. Specifically, the present disclosure relates to a method and apparatus for perceiving a road environment, a training method and apparatus, an electronic device, an autonomous driving vehicle, a storage medium, and a program product.

### BACKGROUND

With a rapid development of science and technology, the number of vehicles traveling on roads has shown a rapid growth trend. A vehicle may perform an autonomous driving function based on a perception system, or a driver may assist in driving a vehicle based on perception information about a road environment generated by the perception system, thereby improving a driving safety.

### SUMMARY

The present disclosure provides a method and apparatus for perceiving a road environment, a vehicle control method and apparatus, a training method and apparatus, an electronic device, an autonomous driving vehicle, a storage medium, and a program product.

According to an aspect of the present disclosure, a method for perceiving a road environment is provided, including: acquiring an associated-region lane attribute and an information to be detected, where the information to be detected is collected by an onboard sensor and represents a target region where a vehicle is traveling, the associated-region lane attribute corresponds to an associated region, and the associated region and the target region meet a predetermined similarity condition; and processing the associated-region lane attribute and the information to be detected by using an onboard perception model to obtain a road perception information of the target region.

According to another aspect of the present disclosure, a vehicle control method is provided, including: controlling a vehicle to drive according to a road perception information, where the road perception information is determined according to the method for perceiving a road environment as described above.

According to another aspect of the present disclosure, a method for training a perception model is provided, including: acquiring a sample associated-region lane attribute and a sample information to be detected, where the sample information to be detected represents a sample target region, the sample associated-region lane attribute corresponds to a sample associated region, and the sample associated region and the sample target region meet a predetermined similarity condition; and performing knowledge transfer training on an initial onboard perception model based on a knowledge distillation mechanism according to the sample associated-region lane attribute, the sample information to be detected, and a large model serving as a teacher model, so as to obtain an onboard perception model, where the onboard perception model is configured to process an associated-region lane attribute and an information to be detected to obtain a road perception information of a target region, and the information to be detected is collected by an onboard sensor.

According to another aspect of the present disclosure, an apparatus for perceiving a road environment for a vehicle is provided, including: a first acquisition module configured to acquire an associated-region lane attribute and an information to be detected, where the information to be detected is collected by an onboard sensor and represents a target region where a vehicle is traveling, the associated-region lane attribute corresponds to an associated region, and the associated region and the target region meet a predetermined similarity condition; and a road perception information obtaining module configured to process the associated-region lane attribute and the information to be detected by using an onboard perception model to obtain a road perception information of the target region.

According to another aspect of the present disclosure, a vehicle control apparatus is provided, including: a vehicle control module configured to control a vehicle to drive according to a road perception information, where the road perception information is determined according to the apparatus for perceiving a road environment as described above.

According to another aspect of the present disclosure, an apparatus for training a perception model is provided, including: a second acquisition module configured to acquire a sample associated-region lane attribute and a sample information to be detected, where the sample information to be detected represents a sample target region, the sample associated-region lane attribute corresponds to a sample associated region, and the sample associated region and the sample target region meet a predetermined similarity condition; and a training module configured to perform knowledge transfer training on an initial onboard perception model based on a knowledge distillation mechanism according to the sample associated-region lane attribute, the sample information to be detected, and a large model serving as a teacher model, so as to obtain an onboard perception model, where the onboard perception model is configured to process an associated-region lane attribute and an information to be detected to obtain a road perception information of a target region, and the information to be detected is collected by an onboard sensor.

According to another aspect of the present disclosure, an electronic device is provided, including: at least one processor; and a memory communicatively connected to the at least one processor, where the memory stores instructions executable by the at least one processor, and the instructions are configured to, when executed by the at least one processor, cause the at least one processor to implement the method for perceiving a road environment or the vehicle control method provided in embodiments of the present disclosure.

According to another aspect of the present disclosure, an autonomous driving vehicle is provided, including the electronic device described above.

According to another aspect of the present disclosure, an electronic device is provided, including: at least one processor; and a memory communicatively connected to the at least one processor, where the memory stores instructions executable by the at least one processor, and the instructions are configured to, when executed by the at least one processor, cause the at least one processor to implement the training method provided in embodiments of the present disclosure.

According to another aspect of the present disclosure, a non-transitory computer-readable storage medium having computer instructions therein is provided, and the computer instructions are configured to cause a computer to implement the methods as described above.

According to another aspect of the present disclosure, a computer program product containing a computer program is provided, where the computer program is configured to, when executed by a processor, cause the processor to implement the methods provided in embodiments of the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 schematically shows an exemplary system architecture to which a method and apparatus for perceiving a road environment may be applied according to an embodiment of the present disclosure;
FIG. 2 schematically shows a flowchart of a method for perceiving a road environment according to an embodiment of the present disclosure;
FIG. 3 schematically shows a schematic diagram of a method for perceiving a road environment according to an embodiment of the present disclosure;
FIG. 4 schematically shows a schematic diagram of an onboard encoder according to an embodiment of the present disclosure;
FIG. 5 schematically shows a schematic diagram of a method for perceiving a road environment according to another embodiment of the present disclosure;
FIG. 6 schematically shows a flowchart of a vehicle control method according to an embodiment of the present disclosure;
FIG. 7 schematically shows a flowchart of a method for training a perception model according to an embodiment of the present disclosure;
FIG. 8 schematically shows a schematic diagram of a method for training a perception model according to an embodiment of the present disclosure;
FIG. 9 schematically shows a block diagram of a system for perceiving a road environment according to an embodiment of the present disclosure;
FIG. 10 schematically shows a block diagram of an apparatus for perceiving a road environment, which is used for a vehicle, according to an embodiment of the present disclosure;
FIG. 11 schematically shows a block diagram of a vehicle control apparatus according to an embodiment of the present disclosure;
FIG. 12 schematically shows a block diagram of an apparatus for training a perception model according to an embodiment of the present disclosure; and
FIG. 13 schematically shows a block diagram of an electronic device suitable for implementing the method provided by embodiments of the present disclosure according to an embodiment of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

In technical solutions of the present disclosure, an acquisition, a storage, an application and other processing of user personal information involved comply with provisions of relevant laws and regulations, take necessary security measures, and do not violate public order and good custom.

The inventors have found that a vehicle may perceive a road environment based on a perception model deployed in an onboard perception system to achieve an autonomous driving function or an assisted driving function. However, an accuracy of the onboard perception model in perceiving a road environment is not high, making it difficult to meet actual autonomous driving or assisted driving requirements. This may reduce driving safety of vehicles and affect traffic efficiency.

An embodiment of the present disclosure provides a method and apparatus for perceiving a road environment, a vehicle control method and apparatus, a training method and apparatus, an electronic device, an autonomous driving vehicle, a storage medium, and a program product. The method for perceiving a road environment includes: acquiring an associated-region lane attribute and an information to be detected, where the information to be detected is collected by an onboard sensor and represents a target region where a vehicle is traveling, the associated-region lane attribute corresponds to an associated region, and the associated region and the target region meet a predetermined similarity condition; and processing the associated-region lane attribute and the information to be detected by using an onboard perception model to obtain a road perception information for the target region.

According to embodiments of the present disclosure, by acquiring the associated-region lane attribute of the associated region with high similarity to the target region and processing the associated-region lane attribute and the information to be detected using the onboard perception model, the onboard perception model may accurately analyze and predict the information to be detected under the condition of learning the associated-region lane attribute of the highly similar associated region. This reduces conflicts in lane attributes between the target region and the associated region in the obtained road perception information, thereby improving the perception accuracy of the road perception information and further enhancing vehicle driving safety and driving efficiency.

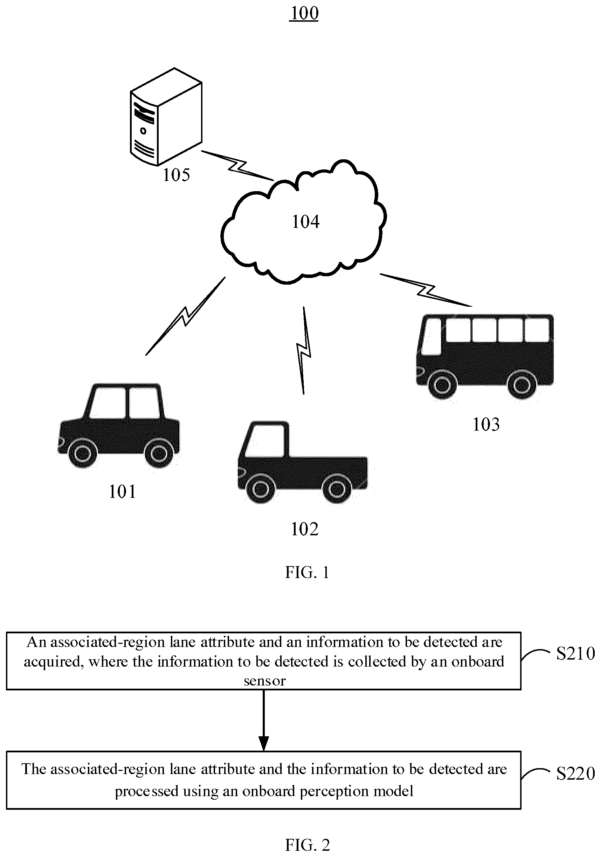

FIG. 1 schematically shows an exemplary system architecture to which a method and apparatus for perceiving a road environment may be applied according to an embodiment of the present disclosure.

It should be noted that FIG. 1 is merely an example of the system architecture to which embodiments of the present disclosure may be applied, so as to help those skilled in the art understand technical contents of the present disclosure. However, it does not mean that embodiments of the present disclosure may not be applied to other devices, systems, environments or scenarios. For example, in another embodiment, the exemplary system architecture to which the method and apparatus for perceiving a road environment may be applied may include a terminal device, but the terminal device may implement the method and apparatus for perceiving a road environment provided in embodiments of the present disclosure without interacting with a server.

As shown in FIG. 1, a system architecture 100 according to such embodiments may include a first vehicle 101, a second vehicle 102, a third vehicle 103, a network 104, and a server 105. The network 104 is a medium for providing a communication link between the first vehicle 101, the second vehicle 102, the third vehicle 103 and the server 105. The network 104 may include various connection types, such as wired and/or wireless communication links, etc.

The first vehicle 101, the second vehicle 102 and the third vehicle 103 may be used by users to interact with the server 105 via the network 104 to receive or send messages, etc.

The first vehicle 101, the second vehicle 102 and the third vehicle 103 may be sedans, trucks, lorries, etc., with information processing functions. The first vehicle 101, the second vehicle 102 and the third vehicle 103 may be equipped with communication modules, such as GSM (Global System for Mobile Communications) modules, LoRA (Low-Rank Adaptation) modules, etc., to facilitate information interaction with the server 105 via the network 104.

The first vehicle 101, the second vehicle 102 and the third vehicle 103 may be further equipped with onboard sensors, such as monocular vision sensors, binocular vision sensors, laser vision sensors, structured light vision sensors, and TOF (Time Of Flight) vision sensors. The onboard sensors may further include other types of sensors such as LiDAR sensors and millimeter-wave radar sensors.

The server 105 may be a server providing various services, such as a background management server (only for example) that supports content browsed by users using the first vehicle 101, the second vehicle 102 and the third vehicle 103. The background management server may analyze and process the received information to be detected and feedback processing results (such as road perception information, etc.) to the vehicles.

It should be noted that the method for perceiving a road environment provided in embodiments of the present disclosure may generally be performed by the first vehicle 101, the second vehicle 102 or the third vehicle 103. Accordingly, the apparatus for perceiving a road environment for a vehicle provided by embodiments of the present disclosure may also be installed in the first vehicle 101, the second vehicle 102 or the third vehicle 103.

Alternatively, the method for perceiving a road environment provided in embodiments of the present disclosure may generally be performed by the server 105. Accordingly, the apparatus for perceiving a road environment for a vehicle provided in embodiments of the present disclosure may generally be installed in the server 105. The method for perceiving a road environment provided by embodiments of the present disclosure may also be performed by a server or server cluster different from the server 105 and capable of communicating with the first vehicle 101, the second vehicle 102, the third vehicle 103 and/or the server 105. Accordingly, the apparatus for perceiving a road environment for a vehicle provided by embodiments of the present disclosure may also be installed in a server or server cluster different from the server 105 and capable of communicating with the first vehicle 101, the second vehicle 102, the third vehicle 103 and/or the server 105.

It should be understood that the number of terminal devices, networks and servers in FIG. 1 is merely schematic. According to implementation needs, any number of terminal devices, networks and servers may be provided.

FIG. 2 schematically shows a flowchart of a method for perceiving a road environment according to an embodiment of the present disclosure.

As shown in FIG. 2, the method for perceiving a road environment includes operation S210 to operation S220.

In operation S210, an associated-region lane attribute and an information to be detected are acquired, where the information to be detected is collected by an onboard sensor.

In operation S220, the associated-region lane attribute and the information to be detected are processed using an onboard perception model, so as to obtain a road perception information of a target region.

According to embodiments of the present disclosure, the vehicle may be an autonomous vehicle traveling in the target region. The onboard sensor may include any vision sensor such as monocular vision sensor, binocular vision sensor, laser vision sensor, structured light vision sensor, etc., but is not limited thereto. The onboard sensor may also include other types of sensors such as LiDAR sensors and millimeter-wave radar sensor. The types of the onboard sensor are not limited in embodiments of the present disclosure.

According to embodiments of the present disclosure, the information to be detected may represent the target region where the vehicle is traveling. The information to be detected may be, for example, any type of information such as an image to be detected that is collected by the onboard sensor of the autonomous vehicle, or the information to be detected may also be collected by the onboard sensors of other vehicles. The specific installation position of the onboard sensor is not limited in embodiments of the present disclosure.

According to embodiments of the present disclosure, the target region and the associated region may be regions where vehicles may travel, such as expressways, viaducts, etc., in public transportation. For another example, the target region and the associated region may also be regions where vehicles may pass after obtaining authorization, such as industrial parks, logistics operation regions, factory workshop regions, etc. The specific types of the target region or the associated region are not limited in embodiments of the present disclosure, as long as vehicles may travel there.

It should be noted that the vehicle may include any type of carrier, such as a sedan, a truck, a bus, etc., but is not limited thereto. The vehicle may also include an autonomous carrier such as an automated guided vehicle.

According to embodiments of the present disclosure, the associated-region lane attribute corresponds to the associated region, and the associated region and the target region meet a predetermined similarity condition. The associated region may include a region at least partially overlapping with the target region, or the associated region may include a road region near the target region, such as a road region adjacent to the target region, or a road region within a predetermined distance range from the target region. Alternatively, the associated region may include a region having a predetermined traffic relationship with the target region, for example, the target region and the associated region belong to a same traffic section (for example, a same expressway, a same viaduct traffic route). The specific setting of the predetermined similarity condition is not limited in embodiments of the present disclosure and may be designed based on actual needs, as long as it may meet the actual needs.

According to embodiments of the present disclosure, the associated-region lane attribute may include an attribute of a lane line in the associated region, such as a lane shape, a lane type, a position, a lane line topology, etc. It should be noted that the lane type may include a traffic direction (such as left turn, forward, etc.) indicated by the lane line, or may include a traffic rule indicated by the lane line, such as allowing a lane change, an opposing traffic indication, etc.

According to embodiments of the present disclosure, the onboard perception model may be a deep learning model used to perform road environment perception tasks. The onboard perception model may be constructed based on any type of deep learning algorithm, such as a convolutional neural network algorithm or a long short-term memory network algorithm. However, the present disclosure is not limited thereto, and the onboard perception model may also be constructed based on other types of algorithms, such as an attention network algorithm. The specific types of algorithms used to construct the onboard perception model are not limited in embodiments of the present disclosure.

According to embodiments of the present disclosure, the onboard perception model may be deployed on a vehicle, such as in a perception system of the vehicle. Alternatively, the onboard perception model may be deployed on other vehicles different from the vehicle. The onboard perception model may also be deployed on any type of server such as a cloud server or a cloud edge server. The specific deployment method of the onboard perception model is not limited in embodiments of the present disclosure.

According to embodiments of the present disclosure, the onboard perception model may be deployed on other vehicles traveling ahead of or behind the vehicle, thereby leveraging computing resources of other vehicles to process the associated-region lane attribute and the information to be detected to obtain road perception information that may assist the vehicle in achieving autonomous driving functions.

According to embodiments of the present disclosure, the road perception information may include obstacles, pedestrians, vehicles, etc., in the target region, and may further include region lane attributes of the road in the target region, such as region lane lines.

In an example, the vehicle may form a platoon with other vehicles in accordance with a preset rule. In this manner, it is possible to collect the information to be detected using the onboard sensors of a plurality of vehicles in the platoon, process the associated-region lane attribute and the information to be detected with the onboard perception model by leveraging the computing resources of some vehicles in the platoon, and broadcast the obtained road perception information to at least one vehicle in the platoon, thereby achieving road environment perception capabilities for the platoon while saving computing resources.

It should be noted that the process of acquiring, collecting or processing information involved in embodiments of the present disclosure is executed under the condition of obtaining authorization from relevant users or organizations. Furthermore, the relevant users or organizations are clearly informed that the purpose of the methods provided in embodiments of the present disclosure is to improve the driving safety and efficiency of vehicles. The methods provided in embodiments of the present disclosure adopt necessary encryption or desensitization measures for the acquired information, including but not limited to the information to be detected, the associated-region lane attributes, etc., to avoid information leakage.

According to embodiments of the present disclosure, the information to be detected may be multimodal information to be detected, which includes at least one of an image to be detected or a point cloud to be detected.

According to embodiments of the present disclosure, the image to be detected may be any type of image such as surround-view image, single-frame image, or continuous multi-frame image. The specific image type of the image to be detected is not limited in embodiments of the present disclosure.

In an example, it is possible to process the image to be detected and the associated-region lane attribute using the onboard perception model, so as to perceive a road environment of the target region.

According to embodiments of the present disclosure, the point cloud to be detected may include any one or more types of point cloud data such as LiDAR point cloud data and millimeter-wave radar point cloud data.

In an example, it is possible to process the point cloud to be detected and the associated-region lane attribute using the onboard perception model, so as to perceive a road environment of the target region.

According to embodiments of the present disclosure, the information to be detected may also include multimodal information to be detected such as the point cloud to be detected and the image to be detected. It is possible to process the multimodal information to be detected and the associated-region lane attribute using the onboard perception model, so as to perceive a road environment of the target region.

It should be noted that the information to be detected and the associated-region lane attribute may be tokenized, embedded, or otherwise processed using the onboard perception model to obtain feature tensors representing the information to be detected and the associated-region lane attribute, so as to execute road environment perception tasks according to the feature tensors.

According to embodiments of the present disclosure, acquiring the information to be detected may include: acquiring a first information to be detected, where the first information to be detected is collected by an onboard sensor installed on the vehicle.

According to embodiments of the present disclosure, the first information to be detected may include at least one modality, such as at least one of a first image to be detected and a first point cloud to be detected that are collected by the onboard sensor of the vehicle.

According to embodiments of the present disclosure, acquiring the information to be detected may further include: acquiring a second information to be detected, where the second information to be detected is collected by onboard sensors installed on other vehicles, and the other vehicles refer to vehicles other than the vehicle. For example, the other vehicles may be those in the target region or around the target region, capable of performing sensor detection on the target region. The other vehicles may be moving vehicles or stationary vehicles.

According to embodiments of the present disclosure, the second information to be detected may also include at least one modality, such as at least one of a second image to be detected and a second point cloud to be detected that are collected by the onboard sensors of other vehicles.

It should be understood that the information to be detected includes the first information to be detected and the second information to be detected.

According to embodiments of the present disclosure, both the first information to be detected and the second information to be detected may be multimodal information, so that the onboard perception information may integrate road environment data detected by the multimodal information to be detected. Furthermore, based on the detection viewing ranges of the onboard sensors of a plurality of vehicles, it is possible to improve the situation that the first information to be detected that is acquired by the vehicle may have errors due to occlusion, thereby improving the perception accuracy of the road perception information.

According to embodiments of the present disclosure, the onboard perception model includes an onboard encoder and an onboard decoder. The onboard encoder and the onboard decoder may be constructed based on an attention network algorithm, such as a Transformer algorithm.

According to embodiments of the present disclosure, processing the associated-region lane attribute and the information to be detected using the onboard perception model to obtain the road perception information of the target region may include: fusing a feature to be detected and an associated-region feature by using the onboard encoder to obtain a to-be-detected region feature in a bird's eye view space; and processing the associated-region feature and the to-be-detected region feature by using the onboard decoder based on an attention mechanism to obtain the road perception information.

According to embodiments of the present disclosure, the feature to be detected is determined according to the information to be detected. For example, it is possible to process the image to be detected based on any type of network algorithm such as a convolutional neural network algorithm to obtain the feature to be detected. The feature to be detected may represent a semantic attribute of the information to be detected collected by the onboard sensor, so that a lane attribute in the target region may be represented based on the feature to be detected.

According to embodiments of the present disclosure, the associated-region feature is obtained by performing a feature extraction on the associated-region lane attribute. For example, the feature extraction of the associated-region lane attribute may be performed based on any type of algorithm such as a convolutional neural network algorithm. The associated-region feature may represent a semantic attribute of an associated lane in the associated region.

According to embodiments of the present disclosure, the feature to be detected may represent the target region based on an acquisition perspective of the onboard sensor. By fusing the feature to be detected and the associated-region feature using the encoder, it is possible to perform a perspective transformation, based on a preset bird's eye view (BEV) space, on the feature to be detected which is from the perspective of the onboard sensor, and fuse an attribute-semantic information of the feature to be detected and an attribute-semantic information of the associated-region feature. In this manner, the obtained to-be-detected region feature in the bird's eye view space may represent the region lane attribute of the lane line in the target region from the bird's eye view, so as to avoid errors in the representation of the region lane attribute generated from the image to be detected acquired by the onboard sensor based on the onboard acquisition perspective due to factors such as occlusion and light irradiation, thereby improving the perception accuracy of the subsequent road perception information based on the to-be-detected region feature.

According to embodiments of the present disclosure, the to-be-detected region feature may also be generated based on a plurality of information to be detected collected by the onboard sensors of a plurality of vehicles. By determining the features to be detected respectively corresponding to the plurality of onboard sensors, the plurality of features to be detected may represent the target region from the data acquisition perspectives of the plurality of vehicles, so that the to-be-detected region feature may represent the region lane attribute of the target region based on semantic attributes from a plurality of acquisition perspectives, the representation accuracy of the to-be-detected region feature for the target region in the bird's eye view space may be improved, and the perception accuracy of the road perception information may be improved.

According to embodiments of the present disclosure, by processing the associated-region feature and the to-be-detected region feature using the onboard decoder based on the attention mechanism, it is possible to further assist the onboard decoder of the onboard perception model in understanding the semantic information representing the region lane attribute in the to-be-detected region feature based on the associated-region feature, thereby reducing the attribute conflict between the region lane attribute represented by the road perception information and the associated-region lane attribute, and improving the perception accuracy and generation efficiency of the road perception information.

According to embodiments of the present disclosure, it is possible to process the to-be-detected region feature and part or all of the associated-region features using the onboard decoder, so as to obtain the road perception information.

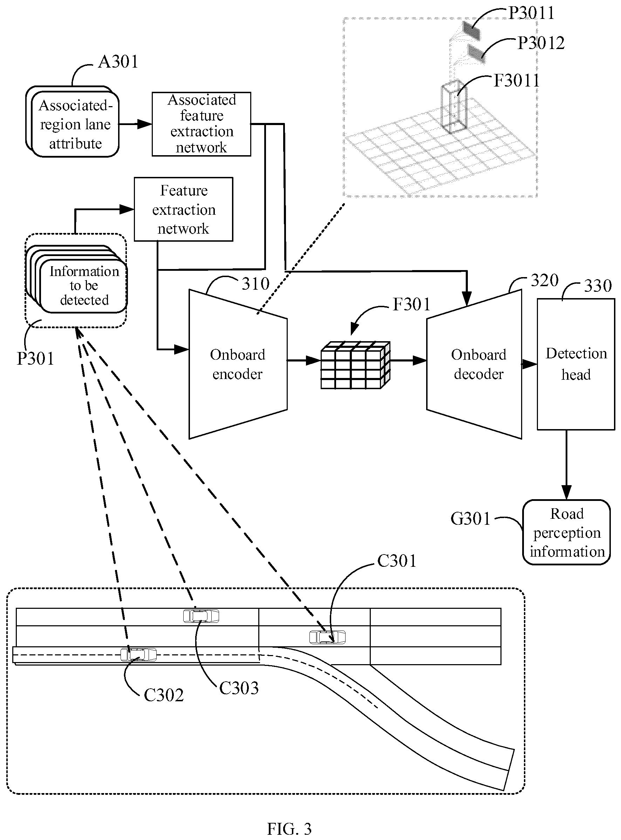

FIG. 3 schematically shows a schematic diagram of a method for perceiving a road environment according to an embodiment of the present disclosure.

As shown in FIG. 3, a target region Q300 may include a plurality of vehicles driving in region lanes, and the plurality of vehicles each may be equipped with an onboard sensor. The onboard sensors of the plurality of vehicles may collect multimodal information to be detected such as images to be detected and point clouds to be detected. A vehicle C301 among the plurality of vehicles may acquire a plurality of information to be detected P301 for input into the onboard perception model by acquiring the information to be detected collected by the onboard sensors of a first other vehicle C302 and a second other vehicle C303 in the target region Q300. It should be understood that the onboard perception model may be deployed on the vehicle C301 and may determine, based on a position of the target region Q300, a plurality of associated-region lane attributes A301 that meet a predetermined similarity condition with the target region Q300.

As shown in FIG. 3, the plurality of information to be detected P301 may be input into a feature extraction network of the onboard perception model to obtain a plurality of features to be detected. The plurality of associated-region lane attributes A301 may be input into an associated-feature extraction network of the onboard perception model to obtain an associated-region feature. The plurality of features to be detected and the associated-region feature may be input into an onboard encoder 310 of the onboard perception model to output a to-be-detected region feature F301 in the bird's eye view space.

As shown in FIG. 3, the target region Q300 may be divided into a plurality of grid sub-regions arranged in an array. For a first information to be detected P3011 and a second information to be detected P3012 that represent a target grid sub-region in the plurality of grid sub-regions, the onboard encoder 310 may map the information to be detected collected from the vehicle perspective to the bird's eye view space, thereby obtaining a to-be-detected region sub-feature F3011 in the bird's eye view space. It may be understood that a to-be-detected region feature F301 in the bird's eye view space may be determined after the to-be-detected region sub-features in the bird's eye view space respectively corresponding to the plurality of grids are obtained.

It should be noted that the first information to be detected P3011 may be collected by the onboard sensor of the vehicle C301 in the target region Q300, and the second information to be detected P3012 may be the information to be detected collected by the onboard sensors of the first other vehicle C302 and the second other vehicle C303 in the target region Q300, which may represent the region lanes in the target region Q300 from different vehicle perspectives. By fusing the features to be detected corresponding to a plurality of vehicle perspectives and mapping them to the bird's eye view space, the to-be-detected region feature may be obtained to accurately represent the region lane attribute of the target region and improve the perception accuracy of the road perception information.

As shown in FIG. 3, the to-be-detected region feature F301 and the associated-region feature may be input into an onboard decoder 320 of the onboard perception model to output a target fusion feature. The target fusion feature may be input into a detection head 330 of the onboard perception model to output a road perception information G301 including any region lane attribute such as region lane line, region lane line topology, and region lane line type.

According to embodiments of the present disclosure, the associated-region lane attribute may include an associated-region lane position and an associated-region lane type. The associated-region lane position may include a coordinate position of the lane line. The associated-region lane type may include any type such as a color of the lane line in the associated region and a type of traffic rule indication.

In an example, the associated-region lane position may be coordinates of one or more points of the lane line in the associated region.

According to embodiments of the present disclosure, the associated-region feature is determined based on the following operations: performing a spatial feature extraction on the associated-region lane attribute to obtain an associated spatial feature; and performing a feature extraction on the associated-region lane position and the associated-region lane type to obtain an associated-lane position and type feature.

According to embodiments of the present disclosure, the associated-region feature includes the associated spatial feature and the associated-lane position and type feature.

According to embodiments of the present disclosure, performing a feature fusion on the associated-region lane position and the associated-region lane type may include processing the associated-region lane position and the associated-region lane type based on a fusion algorithm. The fusion algorithm may include, for example, matrix multiplication, concatenation, attention algorithm, etc. The specific algorithm type of the fusion algorithm is not limited in embodiments of the present disclosure.

It should be noted that the associated-region lane position and the associated-region lane type may be tokenized, embedded, or otherwise processed to obtain feature tensors representing the associated-region lane position and the associated-region lane type. Then, a feature fusion may be performed on the feature tensors.

In an example, the associated-region feature may include an associated-lane spatial feature. The associated-lane spatial feature is obtained by performing a spatial feature extraction on the associated-region lane attribute. The associated-region lane attribute may be represented based on a SD map (standard definition map), and the SD map may be processed based on any type of neural network algorithm such as a convolutional neural network to obtain the associated-lane spatial feature.

In an example, the associated-region lane attribute may be processed based on FPN (Feature Pyramid Networks) algorithm, so that a multi-level feature extraction and fusion may be performed on a spatial feature of the associated-region lane attribute, then the obtained associated-lane spatial feature may accurately represent a spatial semantic information of the lane line in the associated region.

According to embodiments of the present disclosure, a plurality of associated regions may be provided, and the associated-region lane attributes of the plurality of associated regions correspond to a plurality of associated-lane position and type features.

According to embodiments of the present disclosure, the plurality of associated regions and the target region may meet a predetermined similarity condition, such as a predetermined distance condition, a predetermined traffic relationship condition, etc., which will not be described in detail here in embodiments of the present disclosure.

According to embodiments of the present disclosure, the plurality of associated-lane position and type features may include at least one reference position and type feature, which may be an associated-lane position and type feature obtained by performing the method provided in embodiments of the present disclosure based on other images to be detected. For example, in a process of performing the method provided in embodiments of the present disclosure for multiple rounds, during an execution of a current i^{th} round, it is possible to acquire the associated-lane position and type feature for the current i^{th} round, and the associated-lane position and type features obtained from a first round to an (i-1)^{th} round may be used as the reference position and type features.

According to embodiments of the present disclosure, processing the associated-region feature and the to-be-detected region feature by using the onboard decoder based on the attention mechanism may include processing the to-be-detected region feature and at least one of the associated spatial feature or the associated-lane position and type feature by using the onboard decoder to obtain the road perception information.

According to embodiments of the present disclosure, fusing the feature to be detected and the associated-region feature by using the onboard encoder may include: fusing the feature to be detected and the associated-lane spatial feature by using a first attention network of the onboard encoder to obtain a spatial fusion feature in the bird's eye view space; and fusing the spatial fusion feature and the associated-lane position and type feature by using a second attention network of the onboard encoder to obtain the to-be-detected region feature.

According to embodiments of the present disclosure, the first attention network and the second attention network may be constructed based on a cross-attention network algorithm. By the fusion of the feature to be detected and the associated-lane spatial feature using the first network, the spatial fusion feature may accurately learn the semantic information of the region lane attribute in the target region in the bird's eye view space based on the cross-attention mechanism. Then, by the fusion of the spatial fusion feature and the associated-lane position and type feature using the second attention network, the spatial fusion feature in the bird's eye view space may assist in learning the region lane attribute of the region lane in the target region with the help of the position and type of the associated-region lane in the associated region, so that the to-be-detected region feature may accurately represent important lane semantic attributes such as a type, a position, a topology, etc. of the region lane, thereby improving the detection precision and accuracy of the subsequent region lane map.

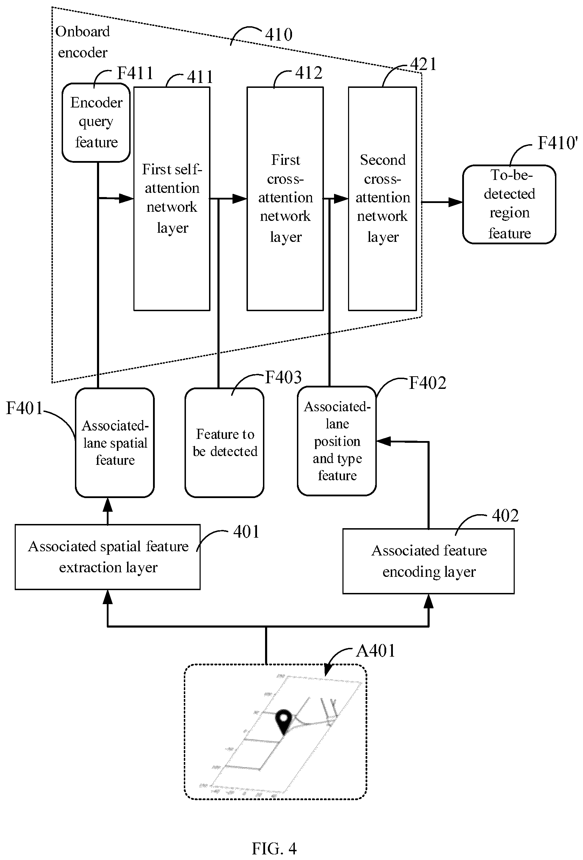

FIG. 4 schematically shows a schematic diagram of an onboard encoder according to an embodiment of the present disclosure.

As shown in FIG. 4, the first attention network of the onboard encoder 410 may include a first self-attention network layer 411 and a first cross-attention network layer 412, and the second attention network of the onboard encoder 410 may include a second cross-attention network layer 421. The associated-region lane attribute may be represented based on a standard definition map A401 for the associated region. The standard definition map A401 may be input into an associated spatial feature extraction layer 401, and an associated-lane spatial feature F401 may be output. The associated spatial feature extraction layer 401 may be constructed based on a feature pyramid networks algorithm. The standard definition map A401 may be input into an associated feature encoding layer 402, and an associated-lane position and type feature F402 may be output. The associated feature encoding network 402 may be constructed based on a position encoding layer of a transformer model, so that the obtained associated-lane position and type feature F402 may be represented as a token sequence. It should be understood that the associated feature extraction network of the onboard perception model may include the associated spatial feature extraction layer 401 and the associated feature encoding layer 402.

As shown in FIG. 4, the associated-lane spatial feature F401 and an onboard encoder query feature F411 are fused and then input into the first self-attention network layer 411 to achieve a self-attention enhancement of the associated-lane spatial feature and obtain an enhanced associated-lane spatial feature. The enhanced associated-lane spatial feature as a query feature (key) and the feature to be detected F403 as a value feature and a key feature are input into the first cross-attention network layer 412, and a spatial fusion feature may be output. The spatial fusion feature as a query feature and the associated-lane position and type feature F402 as a value feature and a key feature are input into the second cross-attention network layer 421, and a to-be-detected region feature F410' may be output.

It should be noted that the onboard encoder query feature F411 may be obtained by training the onboard perception model.

According to embodiments of the present disclosure, processing the associated-region feature and the to-be-detected region feature by using the onboard decoder based on the attention mechanism may include: processing a lane attribute query feature, a key feature and a value feature by using the onboard decoder based on the attention mechanism to obtain a target fusion feature.

According to embodiments of the present disclosure, the key feature and the value feature may be determined based on the to-be-detected region feature and the associated-lane spatial feature. For example, it is possible to fuse the to-be-detected region feature and the associated-lane spatial feature to obtain a fusion to-be-detected region feature, and the fusion to-be-detected region feature is used as the key feature and the value feature.

According to embodiments of the present disclosure, the lane attribute query feature may be obtained by fine-tuning the onboard perception model. For example, the onboard decoder of an initial onboard perception model may be configured with an initialized lane attribute query feature. During the fine-tuning of the onboard perception model, the initialized lane attribute query feature may be adjusted until the fine-tuning process is completed, and the lane attribute query feature may be obtained.

According to embodiments of the present disclosure, the lane attribute query feature may be used as a query feature (Query), and a key feature (Key) and a value feature (Value) may be determined according to the target prompt information and the to-be-detected region feature. Then, the query feature (Query), the key feature (Key) and the value feature (Value) may be processed using the decoder based on a cross-attention mechanism, so as to achieve a full fusion of semantic information of the target prompt information, the to-be-detected region feature and the lane attribute query feature. With a powerful lane attribute understanding capability and expression capability of the large model, the obtained target fusion feature may accurately represent the region lane attribute of the target region, and the detection accuracy of the regional road map may be improved.

According to embodiments of the present disclosure, the road perception information is determined according to the target fusion feature. For example, the onboard perception model may further include a detection head. It is possible to process the target fusion feature using the detection head to obtain the road perception information.

According to embodiments of the present disclosure, the road perception information may include at least one selected from: a region lane line, a region lane topology, and a region lane group.

According to embodiments of the present disclosure, the region lane group represents an association relationship between at least two lanes in the target region.

According to embodiments of the present disclosure, the detection head may include a lane line detection head.

According to embodiments of the present disclosure, processing the target fusion feature by using the detection head to obtain the road perception information may include: processing the target fusion feature by using the lane line detection head to obtain a region lane line.

According to embodiments of the present disclosure, the region lane line may include a trajectory of a lane line in the region lane, and may further include a vehicle traffic rule such as a traffic direction indicated by the lane line and a vehicle lane changing manner. The region lane line may be represented based on vectors.

According to embodiments of the present disclosure, the detection head may further include a lane topology detection head.

According to embodiments of the present disclosure, processing the target fusion feature by using the detection head to obtain the road perception information may further include: processing the target fusion feature by using the lane topology detection head to obtain a region lane topology.

According to embodiments of the present disclosure, the detection head may further include a lane group detection head.

According to embodiments of the present disclosure, processing the target fusion feature by using the detection head to obtain the road perception information may further include: processing the target fusion feature by using the lane group detection head to obtain a region lane group.

According to embodiments of the present disclosure, the regional road map is determined according to a region lane detection result, and the region lane detection result includes a region lane group. The region lane group represents an association relationship between at least two lanes in the target region. For example, it may represent two adjacent region lanes having the same traffic direction.

According to embodiments of the present disclosure, the detection head may further include a lane difference detection head.

According to embodiments of the present disclosure, processing the target fusion feature by using the detection head to obtain the road perception information may further include: processing the target fusion feature by using the lane difference detection head to obtain a target difference information.

According to embodiments of the present disclosure, the target difference information represents that a difference between the associated-region lane attribute and the region lane attribute of the target region meet a predetermined difference condition, and the road perception information may further include the target difference information.

In an example, the target difference information may represent a large difference between the region lane attribute in the current target region and the associated-region lane attribute representing the associated region. Therefore, it may be inferred that the associated-region lane attribute is difficult to accurately represent the current associated region due to road construction, changes in road form rules and so on. In this case, it is possible to use the information to be detected (including at least one of the image to be detected and the point cloud to be detected) collected by the onboard sensor to accurately identify the associated-region lane attribute that needs to be updated, and then use at least one of the image to be detected and the point cloud to be detected, that are related to the associated region, to generate an associated-region road map for the associated region, so as to accurately update the map information and improve the accuracy and safety of the autonomous driving function of the vehicle in a plurality of associated regions.

According to embodiments of the present disclosure, the onboard decoder may further include a topology classification network, which may be constructed based on any type of neural network algorithm such as a multi-layer perceptron algorithm.

According to embodiments of the present disclosure, processing the lane attribute query feature, the key feature and the value feature by using the onboard decoder based on the attention mechanism to obtain the target fusion feature may include: fusing the lane attribute query feature, the key feature and the value feature based on the attention mechanism to obtain an intermediate fusion feature; processing the intermediate fusion feature using the topology classification network to obtain a classification result; and determining the target fusion feature according to the classification result and the intermediate fusion feature based on the attention mechanism.

According to embodiments of the present disclosure, the classification result represents whether a lane topology exists between different region lanes in the target region. For example, "1" may be used to represent a presence of a topology between two lanes, and "0" may be used to represent an absence of a topology between two lanes.

According to embodiments of the present disclosure, the classification result and the intermediate fusion feature may be fused based on the attention mechanism, so that the intermediate fusion feature may learn the lane topology between different region lanes in the target region based on the classification result, thereby improving the perception accuracy of the target fusion feature for region lane attribute in the target region and enhancing vehicle driving safety and traffic efficiency.

According to embodiments of the present disclosure, determining the target fusion feature according to the classification result and the intermediate fusion feature based on the attention mechanism may include: performing a feature fusion on the intermediate fusion feature using a self-attention weight determined from the classification result based on a self-attention mechanism to obtain the target fusion feature.

According to embodiments of the present disclosure, the intermediate fusion feature may include intermediate fusion sub-features representing region lanes in the target region. Through a self-attention fusion of a plurality of intermediate fusion sub-features using the self-attention weight determined from the classification result based on the self-attention mechanism, the obtained target fusion feature may accurately represent the region lane attributes of the region lanes, so that the road perception information obtained from the target fusion feature may accurately represent the road environment of the target region and improve vehicle driving efficiency and safety.

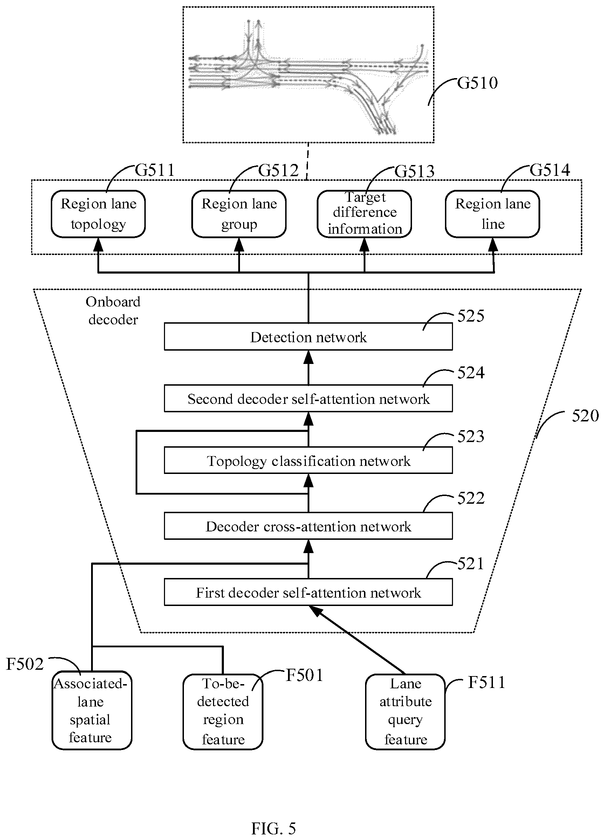

FIG. 5 schematically shows a schematic diagram of a method for perceiving a road environment according to another embodiment of the present disclosure.

As shown in FIG. 5, an onboard decoder 520 of the onboard perception model may include a first decoder self-attention network 521, a decoder cross-attention network 522, a topology classification network 523, a second decoder self-attention network 524, and a detection network 525.

As shown in FIG. 5, a lane attribute query feature F511 obtained by fine-tuning the onboard perception model may be input into the first decoder self-attention network 521, and an enhanced query feature may be obtained. The fusion to-be-detected region feature obtained by fusing the to-be-detected region feature and the associated-lane spatial feature may be used as a value feature and a key feature of the decoder cross-attention network 522. The enhanced query feature as well as the value feature and the key feature of the decoder cross-attention network 522 may be input into the decoder cross-attention network 522, and an intermediate fusion feature may be output. The intermediate fusion feature may be input into the topology classification network 523 to obtain a classification result. The classification result may be used as a self-attention weight of the second decoder self-attention network 524, and a self-attention fusion may be performed on the intermediate fusion feature output by the decoder cross-attention network 522 by using the second decoder self-attention network 524 based on the self-attention weight, so as to obtain the target fusion features.

As shown in FIG. 5, the target fusion feature may be input into the detection network 525 to obtain a region lane topology G511, a region lane group G512, a target difference information G513, and a region lane line (polyline) G514, which may be represented based on a regional road navigation map G510. It should be understood that the detection network 525 may include one or more detection heads, which are not described in detail herein.

Based on the method for perceiving a road environment provided in the foregoing embodiments, an embodiment of the present disclosure further provides a vehicle control method.

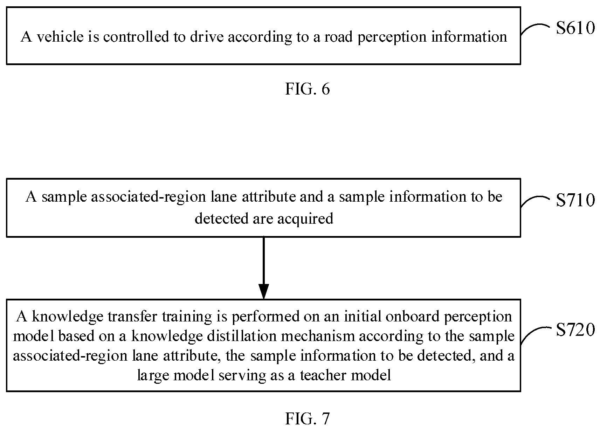

FIG. 6 schematically shows a flowchart of a vehicle control method according to an embodiment of the present disclosure.

As shown in FIG. 6, the vehicle control method includes operation S610.

In operation S610, a vehicle is controlled to drive according to a road perception information.

According to embodiments of the present disclosure, the road perception information is determined according to the method for perceiving a road environment provided in embodiments of the present disclosure.

According to embodiments of the present disclosure, a vehicle may obtain the road perception information by deploying the onboard perception model provided in embodiments of the present disclosure, and thus perform autonomous driving functions based on the road perception information.

In an example, a vehicle may display the road perception information to a driver through image and audio media, so that the driver may drive the vehicle based on the road perception information, thereby implementing an assisted driving function of the vehicle.

An embodiment of the present disclosure further provides a method for training a perception model.

FIG. 7 schematically shows a flowchart of a method for training a perception model according to an embodiment of the present disclosure.

As shown in FIG. 7, the method for training the perception model includes operation S710 to operation S720.

In operation S710, a sample associated-region lane attribute and a sample information to be detected are acquired.

According to embodiments of the present disclosure, the sample information to be detected represents a sample target region, the sample associated-region lane attribute corresponds to a sample associated region, and the sample associated region and the sample target region meet a predetermined similarity condition.

In operation S720, a knowledge transfer training is performed on an initial onboard perception model based on a knowledge distillation mechanism according to the sample associated-region lane attribute, the sample information to be detected, and a large model serving as a teacher model, so as to obtain an onboard perception model.

According to embodiments of the present disclosure, the onboard perception model may be used to process the associated-region lane attribute and the information to be detected collected by the onboard sensor to obtain the road perception information of the target region. The information to be detected represents the target region, the associated-region lane attribute corresponds to an associated region, and the associated region and the target region meet a predetermined similarity condition.

According to embodiments of the present disclosure, the onboard perception model determined by the training method provided in embodiments of the present disclosure may also be used to perform the method for perceiving a road environment provided in embodiments of the present disclosure.

It should be noted that technical terms involved in the training method provided in embodiments of the present disclosure, including but not limited to the sample information to be detected and the sample associated-region lane attribute, have the same or corresponding meanings as technical terms involved in the method for perceiving a road environment provided in embodiments of the present disclosure, which will not be repeated herein.

According to embodiments of the present disclosure, a large model may have a model structure with a large number of parameters, generally at the level of tens of millions or hundreds of millions, and may reach the level of billions or even tens of billions. In terms of the network structure of the large model, for example, a UFO (Unified Feature Optimization) network structure may be adopted. By processing the sample associated-region lane attribute and the sample information to be detected through the large model, it is possible to use the sample associated-region lane attribute as the target prompt information for controlling the large model to perform road environment perception tasks, enabling the large model to exert powerful feature understanding capability and expression capability, and efficiently process the sample information to be detected with a large data scale, thereby improving the detection accuracy and efficiency of the sample road perception information.

It should be noted that the model parameter amount of the onboard perception model is less than that of the large model. The onboard perception model and the large model may be homogenous or heterogeneous models.

According to embodiments of the present disclosure, performing knowledge transfer training on the initial onboard perception model according to the sample associated-region lane attribute, the sample information to be detected, and the large model serving as the teacher model may include: inputting the sample associated-region lane attribute and the sample information to be detected into the initial onboard perception model to obtain a sample road perception information and an intermediate layer feature (e.g., a sample feature to be detected) of the initial onboard perception model; inputting the sample associated-region lane attribute and the sample information to be detected into the large model to obtain a sample collaborative road perception information and a collaborative intermediate layer feature (e.g., a sample collaborative feature to be detected) of the large model; and determining a loss information for training the initial onboard perception model using a difference between the intermediate layer feature and the collaborative intermediate layer feature as well as a difference between the sample road perception information and the sample collaborative road perception information, so as to transfer the road environment perception capability of the large model to the onboard perception model using the loss information and achieve knowledge transfer training of the initial onboard perception model to obtain the onboard perception model.

It should be noted that the large model serving as the teacher model and the initial onboard perception model may be homogenous or heterogeneous models, which is not limited in embodiments of the present disclosure.

According to embodiments of the present disclosure, performing knowledge transfer training on the initial onboard perception model based on the knowledge distillation mechanism according to the sample associated-region lane attribute, the sample information to be detected, and the large model serving as the teacher model may include: fusing a sample feature to be detected and a sample associated-region feature using an onboard encoder of the initial onboard perception model to obtain a sample to-be-detected region feature; determining a feature loss based on the sample to-be-detected region feature and a sample collaborative to-be-detected region feature; and training the initial onboard perception model based on the feature loss.

According to embodiments of the present disclosure, the sample feature to be detected is determined according to the sample information to be detected, and the sample associated-region feature is obtained by performing a feature extraction on the sample associated-region lane attribute.

According to embodiments of the present disclosure, the sample to-be-detected region feature may be a feature tensor output by the onboard encoder of the initial onboard perception model.

According to embodiments of the present disclosure, the sample collaborative to-be-detected region feature is obtained by fusing the sample information to be detected and the sample associated-region lane attribute using the large model. For example, the sample collaborative to-be-detected region feature may be a feature tensor obtained by processing the sample information to be detected and the sample associated-region lane attribute using the encoder of the large model.

According to embodiments of the present disclosure, determining the feature loss based on the sample to-be-detected region feature and the sample collaborative to-be-detected region feature may include processing the sample to-be-detected region feature and the sample collaborative to-be-detected region feature using a loss function to obtain the feature loss.

According to embodiments of the present disclosure, training the initial onboard perception model based on the feature loss may include generating a gradient corresponding to the model parameters of the initial onboard perception model based on the feature loss, and then adjusting the parameters of the initial onboard perception model using the gradient.

According to embodiments of the present disclosure, the sample collaborative to-be-detected region feature may be obtained through the following operations: processing the sample information to be detected using a collaborative feature extraction network of the large model to obtain a sample collaborative feature to be detected; processing the sample associated-region lane attribute using a target prompt information construction network related to the large model to obtain a sample target prompt information; and processing the sample collaborative feature to be detected and the sample target prompt information using an encoder of the large model to obtain the sample collaborative to-be-detected region feature in the bird's eye view space.

According to embodiments of the present disclosure, the collaborative feature extraction network may be constructed based on a feature pyramid network algorithm, or may be constructed based on other types of neural network algorithms, which is not limited in embodiments of the present disclosure.

According to embodiments of the present disclosure, the target prompt information construction network may be a homogenous or heterogeneous model with respect to the associated feature extraction network provided in the foregoing embodiments. It is possible to perform a feature extraction on the sample associated-region road attribute using the target prompt information construction network and determine the target prompt information according to the sample collaborative associated-region feature to help the large model understand serialized identifiers or tensors related to the detection task. The target prompt information may assist the large model in accurately perceiving the region lane attribute in the image to be detected based on the included associated-region lane attribute, avoiding significant attribute conflicts (e.g., changes in lane line indication directions) between the region lane attribute in the region lane detection result and the sample associated-region lane attribute, and improving the perception accuracy of the region lane in the target region.

According to embodiments of the present disclosure, performing knowledge transfer training on the initial onboard perception model based on the knowledge distillation mechanism according to the sample associated-region lane attribute, the sample information to be detected, and the large model serving as the teacher model may further include: processing the sample associated-region lane attribute using an associated feature extraction network of the initial onboard perception model to obtain the sample associated-region feature; and determining a first feature loss based on the sample associated-region feature and the sample target prompt information.

According to embodiments of the present disclosure, the feature loss may include the first feature loss and a second loss, where the second loss may represent a difference between the sample to-be-detected region feature and the sample collaborative to-be-detected region feature.

In an example, the second feature loss may be obtained by processing the sample to-be-detected region feature and the sample collaborative to-be-detected region feature using a loss function.

According to embodiments of the present disclosure, training the initial onboard perception model based on the feature loss may include training the initial onboard perception model based on the feature loss and a road perception information loss.

According to embodiments of the present disclosure, the road perception information loss is determined based on the sample road perception information and a sample collaborative road perception information which is used as a pseudo-label.

According to embodiments of the present disclosure, the sample road perception information is obtained by processing the sample associated-region lane attribute and the sample information to be detected using the initial onboard perception model, and the sample collaborative road perception information is obtained by processing the sample associated-region lane attribute and the sample information to be detected using the large model. The sample road perception information and the sample collaborative road perception information may be road environment perception results of the initial onboard perception model and the large model for the sample target region, respectively.

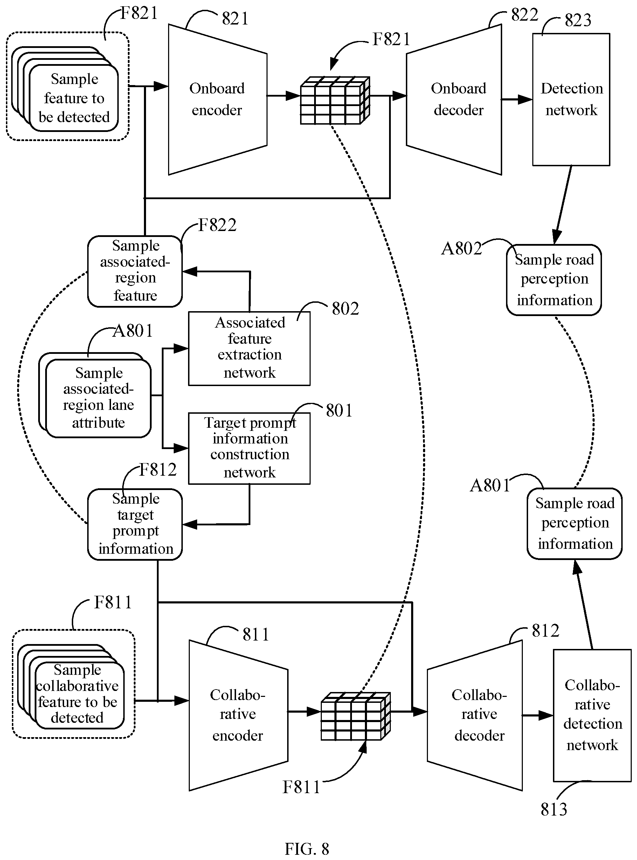

FIG. 8 schematically shows a schematic diagram of a method for training a perception model according to an embodiment of the present disclosure.

As shown in FIG. 8, a large model with road environment perception capability may include a target prompt information construction network 801, a collaborative encoder 811, a collaborative decoder 812, and a collaborative detection network 813. The initial onboard perception model may include an associated feature extraction network 802, an onboard encoder 821, an onboard decoder 822, and a detection network 823. A sample collaborative feature to be detected F811 may be obtained by performing a feature extraction on the sample information to be detected using a collaborative feature extraction network related to the large model, and a sample feature to be detected F812 may be obtained by performing a feature extraction on the sample information to be detected using a feature extraction network related to the onboard perception model. A sample associated-region lane attribute A801 may be input into the target prompt information construction network 801 to output a sample target prompt information F812. The sample associated-region lane attribute A801 may also be input into the associated feature extraction network 802 to obtain a sample associated-region feature F822.

As shown in FIG. 8, the collaborative encoder 811 may process the sample target prompt information F812 and the sample collaborative feature to be detected F811 to obtain a sample collaborative to-be-detected region feature F831 in the bird's eye view space. The sample collaborative to-be-detected region feature F831 and the sample target prompt information F812 may be input into the collaborative decoder 812 to obtain a sample collaborative target fusion feature. The sample collaborative target fusion feature may be input into the collaborative detection network 813 to obtain a sample collaborative road perception information G801.

As shown in FIG. 8, the onboard encoder 821 may process the sample associated-region feature F822 and the sample feature to be detected F812 to obtain a sample to-be-detected region feature F832 in the bird's eye view space. The sample to-be-detected region feature F832 and a sample associated-region spatial feature in the sample associated-region feature F822 may be input into the onboard decoder 822 to obtain a sample target fusion feature. The sample target fusion feature may be input into the detection network 823 to obtain a sample road perception information G802.

As shown in FIG. 8, the sample target prompt information F812 and the sample associated-region feature F822 may be processed using a loss function to obtain the first feature loss. The sample collaborative to-be-detected region feature F831 and the sample to-be-detected region feature F832 may be processed using a loss function to obtain the second feature loss. Using the sample collaborative road perception information G801 as a pseudo-label, the sample road perception information G802 and the sample collaborative road perception information G801 may be processed using a loss function to obtain a road perception information loss. The model parameters of the initial onboard perception model may be updated according to the first feature loss, the second feature loss and the road perception information loss until an onboard perception model meeting the training conditions is obtained.

According to embodiments of the present disclosure, the training method provided in embodiments of the present disclosure may enable the associated feature extraction network of the onboard perception model to have a function of prompt information construction, thereby allowing the onboard perception model to simulate the large model.

It should be noted that in the training process shown in FIG. 8, during multiple rounds of training the initial onboard perception model, a current round of training may be performed based on the sample target prompt information F812, the sample collaborative to-be-detected region feature F831 and the sample collaborative road perception information G801 from a previous round, so as to avoid repeated data processing by the large model and save the computational overhead of the training method.

In an example, training the initial onboard perception model based on the feature loss and the road perception information loss may further include: first processing the sample target prompt information and the sample associated-region feature using a loss function to obtain a first feature loss, and adjusting the model parameters of the associated feature extraction network of the onboard perception model according to the first feature loss to pre-train the associated feature extraction network. The pre-trained associated feature extraction network may have the function of constructing prompt information. Then, model parameters of at least one of the associated feature extraction network, the onboard encoder, the onboard decoder and the detection network in the pre-trained initial perception model may be adjusted using at least one of the first feature loss, the second feature loss and the road perception information loss, so as to achieve the knowledge transfer training on the initial perception model and obtain a trained perception model.

It should be noted that the process of acquiring, collecting or processing information involved in embodiments of the present disclosure is executed under the condition of obtaining authorization from relevant users or organizations. Furthermore, the relevant users or organizations are clearly informed that the purpose of the methods provided in embodiments of the present disclosure is to improve the driving safety and efficiency of vehicles. The methods provided in embodiments of the present disclosure adopt necessary encryption or desensitization measures for the acquired information, including but not limited to the information to be detected, the associated-region lane attributes, etc., to avoid information leakage.

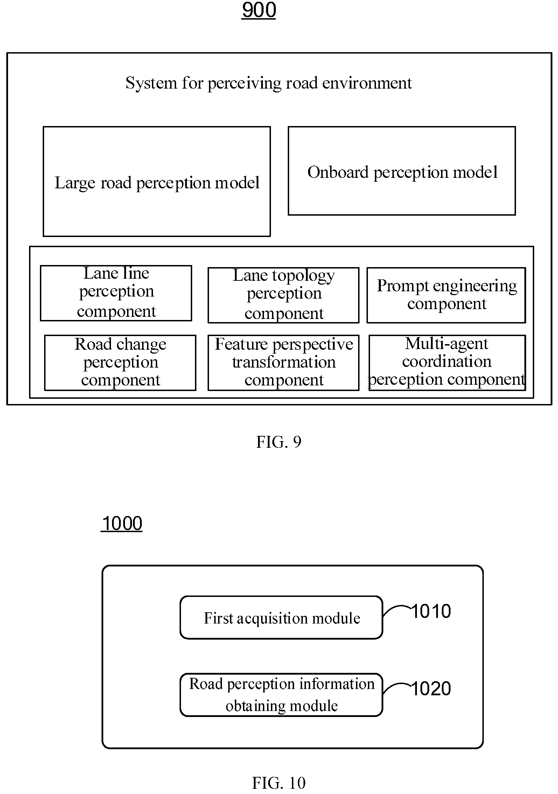

FIG. 9 schematically shows a block diagram of a system for perceiving a road environment according to an embodiment of the present disclosure.

As shown in FIG. 9, a system 900 for perceiving a road environment may include a large road perception model and an onboard perception model. The large road perception model may be the large model in the training method according to embodiments of the present disclosure. The large road perception model and the onboard perception model may implement functional scheduling based on a multi-agent coordination perception component, so that the large road perception model and the onboard perception model may be used to perceive a road environment of the target region to improve the perception accuracy. A lane line perception component may perceive lane lines by invoking at least one of the large road perception model and the onboard perception model to obtain attribute information such as the type and position of lane lines in the road environment. A lane topology perception component may perceive a lane topology by invoking at least one of the large road perception model and the onboard perception model to obtain a topology between lanes. A prompt engineering component may be implemented based on a target prompt information construction network related to the large model, and may be used to generate a target prompt information or pre-train the associated feature extraction network of the onboard perception model. A road change perception component may generate a target difference information based on at least one of the large road perception model and the onboard perception model to detect changes in the associated region or the target region, thereby timely updating the map information of the associated region or the target region. A feature perspective transformation component may convert an information to be detected from a vehicle perspective into a feature tensor in the bird's eye view space to improve the accuracy of the road environment perception.

FIG. 10 schematically shows a block diagram of an apparatus for perceiving a road environment, which is used for a vehicle, according to an embodiment of the present disclosure.

As shown in FIG. 10, an apparatus 1000 for perceiving a road environment for a vehicle includes a first acquisition module 1010 and a road perception information obtaining module 1020.

The first acquisition module 1010 is used to acquire an associated-region lane attribute and an information to be detected, where the information to be detected is collected by an onboard sensor and represents a target region where a vehicle is traveling, the associated-region lane attribute corresponds to an associated region, and the associated region and the target region meet a predetermined similarity condition.

The road perception information obtaining module 1020 is used to process the associated-region lane attribute and the information to be detected by using an onboard perception model to obtain a road perception information of the target region.

According to embodiments of the present disclosure, the onboard perception model includes an onboard encoder and an onboard decoder.

According to embodiments of the present disclosure, the road perception information obtaining module includes a to-be-detected region feature obtaining sub-module and a road perception information obtaining sub-module.

The to-be-detected region feature obtaining sub-module is used to fuse a feature to be detected and an associated-region feature by using the onboard encoder to obtain a to-be-detected region feature in a bird's eye view space, where the feature to be detected is determined according to the information to be detected, and the associated-region feature is obtained by performing a feature extraction on the associated-region lane attribute.

The road perception information obtaining sub-module is used to process the associated-region feature and the to-be-detected region feature by using the onboard decoder based on an attention mechanism to obtain the road perception information.

According to embodiments of the present disclosure, the associated-region lane attribute includes an associated-region lane position and an associated-region lane type.

According to embodiments of the present disclosure, the associated-region feature is determined by: performing a spatial feature extraction on the associated-region lane attribute to obtain an associated spatial feature; and performing a feature extraction on the associated-region lane position and the associated-region lane type to obtain an associated-lane position and type feature, where the associated-region feature includes the associated spatial feature and the associated-lane position and type feature.

According to embodiments of the present disclosure, the to-be-detected region feature obtaining sub-module includes a spatial fusion feature obtaining unit and a to-be-detected region feature obtaining unit.

The spatial fusion feature obtaining unit is used to fuse the feature to be detected and the associated-lane spatial feature by using a first attention network of the onboard encoder to obtain a spatial fusion feature in the bird's eye view space.

The to-be-detected region feature obtaining unit is used to fuse the spatial fusion feature and the associated-lane position and type feature by using a second attention network of the onboard encoder to obtain the to-be-detected region feature.

According to embodiments of the present disclosure, the road perception information obtaining sub-module includes a target fusion feature obtaining unit.

The target fusion feature obtaining unit is used to process a lane attribute query feature, a key feature and a value feature by using the onboard decoder based on the attention mechanism to obtain a target fusion feature, where the key feature and the value feature are determined based on the to-be-detected region feature and the associated-lane spatial feature, the lane attribute query feature is obtained by fine-tuning the onboard perception model, and the road perception information is determined according to the target fusion feature.

According to embodiments of the present disclosure, the onboard decoder includes a topology classification network.

According to embodiments of the present disclosure, the target fusion feature obtaining unit includes an intermediate fusion feature obtaining sub-unit, a classification result obtaining sub-unit, and a target fusion feature determination sub-unit.

The intermediate fusion feature obtaining sub-unit is used to fuse the lane attribute query feature, the key feature and the value feature based on the attention mechanism to obtain an intermediate fusion feature.

The classification result obtaining sub-unit is used to process the intermediate fusion feature using the topology classification network to obtain a classification result, where the classification result represents a presence or absence of a lane topology between different region lanes in the target region.

The target fusion feature determination sub-unit is used to determine the target fusion feature according to the classification result and the intermediate fusion feature based on the attention mechanism.

According to embodiments of the present disclosure, the target fusion feature determination sub-unit is further used to: perform a feature fusion on the intermediate fusion feature using a self-attention weight based on a self-attention mechanism to obtain the target fusion feature, where the self-attention weight is determined according to the classification result.

According to embodiments of the present disclosure, the road perception information includes at least one of a region lane line, a region lane topology, and a region lane group; where the region lane group represents an association relationship between at least two lanes in the target region.

According to embodiments of the present disclosure, the information to be detected is a multimodal information to be detected, and the multimodal information to be detected includes at least one of an image to be detected and a point cloud to be detected.

According to embodiments of the present disclosure, the first acquisition module includes a first acquisition sub-module.

The first acquisition sub-module is used to acquire a first information to be detected, where the first information to be detected is collected by an onboard sensor installed on the vehicle.

According to embodiments of the present disclosure, the first acquisition module includes a second acquisition sub-module.

The second acquisition sub-module is used to acquire a second information to be detected, where the second information to be detected is collected by onboard sensors installed on other vehicles different from the vehicle, and the information to be detected includes the first information to be detected and the second information to be detected.

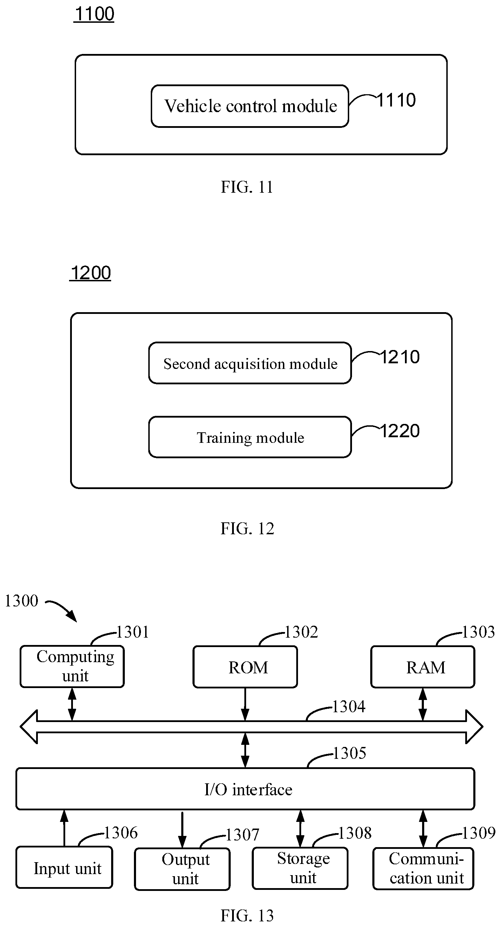

FIG. 11 schematically shows a block diagram of a vehicle control apparatus according to an embodiment of the present disclosure.

As shown in FIG. 11, a vehicle control apparatus 1100 includes a vehicle control module 1110.

The vehicle control module 1110 is used to control a vehicle to drive according to a road perception information, where the road perception information is determined according to the apparatus for perceiving a road environment for a vehicle according to embodiments of the present disclosure.

FIG. 12 schematically shows a block diagram of an apparatus for training a perception model according to an embodiment of the present disclosure.

As shown in FIG. 12, an apparatus 1200 for training a perception model may include a second acquisition module 1210 and a training module 1220.

The second acquisition module 1210 is used to acquire a sample associated-region lane attribute and a sample information to be detected, where the sample information to be detected represents a sample target region, the sample associated-region lane attribute corresponds to a sample associated region, and the sample associated region and the sample target region meet a predetermined similarity condition.

The training module 1220 is used to perform knowledge transfer training on an initial onboard perception model based on a knowledge distillation mechanism according to the sample associated-region lane attribute, the sample information to be detected, and a large model serving as a teacher model, so as to obtain an onboard perception model, where the onboard perception model is used to process an associated-region lane attribute and an information to be detected to obtain a road perception information of a target region, and the information to be detected is collected by an onboard sensor.

According to embodiments of the present disclosure, the onboard perception model may be used to implement the method for perceiving a road environment provided in embodiments of the present disclosure.

According to embodiments of the present disclosure, the training module includes a sample to-be-detected region feature obtaining sub-module, a feature loss determination sub-module, and a training sub-module.

The sample to-be-detected region feature obtaining sub-module is used to fuse a sample feature to be detected and a sample associated-region feature using an onboard encoder of the initial onboard perception model to obtain a sample to-be-detected region feature, where the sample feature to be detected is determined according to the sample information to be detected, and the sample associated-region feature is obtained by performing a feature extraction on the sample associated-region lane attribute.

The feature loss determination sub-module is used to determine a feature loss based on the sample to-be-detected region feature and a sample collaborative to-be-detected region feature, where the sample collaborative to-be-detected region feature is obtained by fusing the sample information to be detected and the sample associated-region lane attribute using the large model.

The training sub-module is used to train the initial onboard perception model based on the feature loss.

According to embodiments of the present disclosure, the sample collaborative to-be-detected region feature is obtained by: processing the sample information to be detected using a collaborative feature extraction network of the large model to obtain a sample collaborative feature to be detected; processing the sample associated-region lane attribute using a target prompt information construction network related to the large model to obtain a sample target prompt information; and processing the sample collaborative feature to be detected and the sample target prompt information using an encoder of the large model to obtain the sample collaborative to-be-detected region feature.

According to embodiments of the present disclosure, the training module further includes a sample associated-region feature obtaining sub-module and a first feature loss obtaining sub-module.

The sample associated-region feature obtaining sub-module is used to process the sample associated-region lane attribute using an associated feature extraction network of the initial onboard perception model to obtain the sample associated-region feature.

The first feature loss obtaining sub-module is used to determine a first feature loss based on the sample associated-region feature and the sample target prompt information, where the feature loss includes the first feature loss, and the feature loss further includes a second loss between the sample to-be-detected region feature and the sample collaborative to-be-detected region feature.

According to embodiments of the present disclosure, the training sub-module includes a training unit.

The training unit is used to train the initial onboard perception model based on the feature loss and a road perception information loss, where the road perception information loss is determined based on a sample road perception information and a sample collaborative road perception information, the sample road perception information is obtained by processing the sample associated-region lane attribute and the sample information to be detected using the initial onboard perception model, the sample collaborative road perception information is used as a pseudo-label and is obtained by processing the sample associated-region lane attribute and the sample information to be detected using the large model.

According to embodiments of the present disclosure, the present disclosure further provides an electronic device, an autonomous driving vehicle, a readable storage medium, and a computer program product.

According to embodiments of the present disclosure, an electronic device is provided, including: at least one processor; and a memory communicatively connected to the at least one processor. The memory stores instructions executable by the at least one processor, and the instructions are used to, when executed by the at least one processor, cause the at least one processor to implement the method for perceiving a road environment or the vehicle control method provided in embodiments of the present disclosure.

According to embodiments of the present disclosure, an autonomous driving vehicle is provided, including the electronic device for performing the method for perceiving a road environment or the vehicle control method provided in embodiments of the present disclosure.

According to embodiments of the present disclosure, an electronic device is provided, including: at least one processor; and a memory communicatively connected to the at least one processor. The memory stores instructions executable by the at least one processor, and the instructions are used to, when executed by the at least one processor, cause the at least one processor to implement the training method provided in embodiments of the present disclosure.

According to embodiments of the present disclosure, a non-transitory computer-readable storage medium having computer instructions therein is provided, and the computer instructions are used to cause a computer to implement the methods provided in embodiments of the present disclosure.

According to embodiments of the present disclosure, a computer program product containing a computer program is provided, and the computer program is used to, when executed by a processor, cause the processor to implement the methods provided in embodiments of the present disclosure.

FIG. 13 schematically shows a block diagram of an electronic device suitable for implementing the methods provided in embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 13, the electronic device 1300 includes a computing unit 1301 which may perform various appropriate actions and processes according to a computer program stored in a read only memory (ROM) 1302 or a computer program loaded from a storage unit 1308 into a random access memory (RAM) 1303. In the RAM 1303, various programs and data necessary for an operation of the electronic device 1300 may also be stored. The computing unit 1301, the ROM 1302 and the RAM 1303 are connected to each other through a bus 1304. An input/output (I/O) interface 1305 is also connected to the bus 1304.

A plurality of components in the electronic device 1300 are connected to the I/O interface 1305, including: an input unit 1306, such as a keyboard, or a mouse; an output unit 1307, such as displays or speakers of various types; a storage unit 1308, such as a disk, or an optical disc; and a communication unit 1309, such as a network card, a modem, or a wireless communication transceiver. The communication unit 1309 allows the electronic device 1300 to exchange information/data with other devices through a computer network such as Internet and/or various telecommunication networks.

The computing unit 1301 may be various general-purpose and/or dedicated processing assemblies having processing and computing capabilities. Some examples of the computing units 1301 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 1301 executes various methods and processes described above, such as the method for perceiving a road environment, the vehicle control method or the method for training a perception model. For example, in some embodiments, the method for perceiving a road environment, the vehicle control method or the method for training a perception model may be implemented as a computer software program which is tangibly embodied in a machine-readable medium, such as the storage unit 1308. In some embodiments, the computer program may be partially or entirely loaded and/or installed in the electronic device 1300 via the ROM 1302 and/or the communication unit 1309. The computer program, when loaded in the RAM 1303 and executed by the computing unit 1301, may execute one or more steps in the method for perceiving a road environment, the vehicle control method or the method for training a perception model described above. Alternatively, in other embodiments, the computing unit 1301 may be used to perform the method for perceiving a road environment, the vehicle control method or the method for training a perception model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method for perceiving a road environment, comprising:
acquiring (S210) an associated-region lane attribute and an information to be detected, wherein the information to be detected is collected by an onboard sensor and represents a target region where a vehicle is traveling, the associated-region lane attribute corresponds to an associated region, and the associated region and the target region meet a predetermined similarity condition; and
processing (S220) the associated-region lane attribute and the information to be detected by using an onboard perception model to obtain a road perception information of the target region.

2. The method according to claim 1, wherein the onboard perception model comprises an onboard encoder and an onboard decoder, and the processing the associated-region lane attribute and the information to be detected by using an onboard perception model to obtain a road perception information of the target region comprises:
fusing a feature to be detected and an associated-region feature by using the onboard encoder to obtain a to-be-detected region feature in a bird's eye view space, wherein the feature to be detected is determined according to the information to be detected, and the associated-region feature is obtained by performing a feature extraction on the associated-region lane attribute; and
processing the associated-region feature and the to-be-detected region feature by using the onboard decoder based on an attention mechanism to obtain the road perception information.

3. The method according to claim 2, wherein the associated-region lane attribute comprises an associated-region lane position and an associated-region lane type, and the associated-region feature is determined by:
performing a spatial feature extraction on the associated-region lane attribute to obtain an associated spatial feature; and
performing a feature extraction on the associated-region lane position and the associated-region lane type to obtain an associated-lane position and type feature, wherein the associated-region feature comprises the associated spatial feature and the associated-lane position and type feature.

4. The method according to claim 3, wherein the fusing a feature to be detected and an associated-region feature by using the onboard encoder comprises:
fusing the feature to be detected and the associated-lane spatial feature by using a first attention network of the onboard encoder to obtain a spatial fusion feature in the bird's eye view space; and
fusing the spatial fusion feature and the associated-lane position and type feature by using a second attention network of the onboard encoder to obtain the to-be-detected region feature.

5. The method according to any one of claims 2 to 4, wherein the processing the associated-region feature and the to-be-detected region feature by using the onboard decoder based on an attention mechanism comprises:
processing a lane attribute query feature, a key feature and a value feature by using the onboard decoder based on the attention mechanism to obtain a target fusion feature, wherein the key feature and the value feature are determined based on the to-be-detected region feature and the associated-lane spatial feature, the lane attribute query feature is obtained by fine-tuning the onboard perception model, and the road perception information is determined according to the target fusion feature,
wherein the onboard decoder comprises a topology classification network, and the processing a lane attribute query feature, a key feature and a value feature by using the onboard decoder based on the attention mechanism to obtain a target fusion feature comprises:
fusing the lane attribute query feature, the key feature and the value feature based on the attention mechanism to obtain an intermediate fusion feature;
processing the intermediate fusion feature using the topology classification network to obtain a classification result, wherein the classification result represents a presence or absence of a lane topology between different region lanes in the target region; and
determining the target fusion feature according to the classification result and the intermediate fusion feature based on the attention mechanism,
wherein the determining the target fusion feature according to the classification result and the intermediate fusion feature based on the attention mechanism comprises:
performing a feature fusion on the intermediate fusion feature using a self-attention weight based on a self-attention mechanism to obtain the target fusion feature, wherein the self-attention weight is determined according to the classification result.

6. The method according to any one of claims 1 to 4, wherein the road perception information comprises at least one of a region lane line, a region lane topology, and a region lane group;
wherein the region lane group represents an association relationship between at least two lanes in the target region,
wherein the information to be detected is a multimodal information to be detected, and the multimodal information to be detected comprises at least one of an image to be detected and a point cloud to be detected,
wherein the acquiring an information to be detected comprises:
acquiring a first information to be detected, wherein the first information to be detected is collected by an onboard sensor installed on the vehicle; and/or
acquiring a second information to be detected, wherein the second information to be detected is collected by onboard sensors installed on other vehicles different from the vehicle, and the information to be detected comprises the first information to be detected and the second information to be detected.

7. A method for training a perception model, comprising:
acquiring (S710) a sample associated-region lane attribute and a sample information to be detected, wherein the sample information to be detected represents a sample target region, the sample associated-region lane attribute corresponds to a sample associated region, and the sample associated region and the sample target region meet a predetermined similarity condition; and
performing (S720) knowledge transfer training on an initial onboard perception model based on a knowledge distillation mechanism according to the sample associated-region lane attribute, the sample information to be detected, and a large model serving as a teacher model, so as to obtain an onboard perception model, wherein the onboard perception model is configured to process an associated-region lane attribute and an information to be detected to obtain a road perception information of a target region, and the information to be detected is collected by an onboard sensor.

8. The method according to claim 7, wherein the performing knowledge transfer training on an initial onboard perception model based on a knowledge distillation mechanism according to the sample associated-region lane attribute, the sample information to be detected, and a large model serving as a teacher model comprises:
fusing a sample feature to be detected and a sample associated-region feature using an onboard encoder of the initial onboard perception model to obtain a sample to-be-detected region feature, wherein the sample feature to be detected is determined according to the sample information to be detected, and the sample associated-region feature is obtained by performing a feature extraction on the sample associated-region lane attribute;
determining a feature loss based on the sample to-be-detected region feature and a sample collaborative to-be-detected region feature, wherein the sample collaborative to-be-detected region feature is obtained by fusing the sample information to be detected and the sample associated-region lane attribute using the large model; and
training the initial onboard perception model based on the feature loss,
wherein the sample collaborative to-be-detected region feature is obtained by:
processing the sample information to be detected using a collaborative feature extraction network of the large model to obtain a sample collaborative feature to be detected;
processing the sample associated-region lane attribute using a target prompt information construction network related to the large model to obtain a sample target prompt information; and
processing the sample collaborative feature to be detected and the sample target prompt information using an encoder of the large model to obtain the sample collaborative to-be-detected region feature,
wherein the performing knowledge transfer training on an initial onboard perception model based on a knowledge distillation mechanism according to the sample associated-region lane attribute, the sample information to be detected, and a large model serving as a teacher model further comprises:
processing the sample associated-region lane attribute using an associated feature extraction network of the initial onboard perception model to obtain the sample associated-region feature; and
determining a first feature loss based on the sample associated-region feature and the sample target prompt information, wherein the feature loss comprises the first feature loss, and the feature loss further comprises a second loss between the sample to-be-detected region feature and the sample collaborative to-be-detected region feature,
wherein the training the initial onboard perception model based on the feature loss comprises:
training the initial onboard perception model based on the feature loss and a road perception information loss, wherein the road perception information loss is determined based on a sample road perception information and a sample collaborative road perception information, the sample road perception information is obtained by processing the sample associated-region lane attribute and the sample information to be detected using the initial onboard perception model, the sample collaborative road perception information is configured as a pseudo-label and is obtained by processing the sample associated-region lane attribute and the sample information to be detected using the large model.

9. An apparatus (1000) for perceiving a road environment for a vehicle, comprising:
a first acquisition module (1010) configured to acquire an associated-region lane attribute and an information to be detected, wherein the information to be detected is collected by an onboard sensor and represents a target region where a vehicle is traveling, the associated-region lane attribute corresponds to an associated region, and the associated region and the target region meet a predetermined similarity condition; and
a road perception information obtaining module (1020) configured to process the associated-region lane attribute and the information to be detected by using an onboard perception model to obtain a road perception information of the target region.

10. An apparatus (1200) for training a perception model, comprising:
a second acquisition module (1210) configured to acquire a sample associated-region lane attribute and a sample information to be detected, wherein the sample information to be detected represents a sample target region, the sample associated-region lane attribute corresponds to a sample associated region, and the sample associated region and the sample target region meet a predetermined similarity condition; and
a training module (1220) configured to perform knowledge transfer training on an initial onboard perception model based on a knowledge distillation mechanism according to the sample associated-region lane attribute, the sample information to be detected, and a large model serving as a teacher model, so as to obtain an onboard perception model, wherein the onboard perception model is configured to process an associated-region lane attribute and an information to be detected to obtain a road perception information of a target region, and the information to be detected is collected by an onboard sensor.

11. An electronic device, comprising:
at least one processor; and
a memory communicatively connected to the at least one processor, wherein the memory stores instructions executable by the at least one processor, and the instructions are configured to, when executed by the at least one processor, cause the at least one processor to implement the method of any one of claims 1 to 6.

12. An autonomous driving vehicle, comprising the electronic device of claim 11.

13. An electronic device, comprising:
at least one processor; and
a memory communicatively connected to the at least one processor, wherein the memory stores instructions executable by the at least one processor, and the instructions are configured to, when executed by the at least one processor, cause the at least one processor to implement the method of any one of claims 7 to 8.

14. A non-transitory computer-readable storage medium having computer instructions therein, wherein the computer instructions are configured to cause a computer to implement the method of any one of claims 1 to 8.

15. A computer program product containing a computer program, wherein the computer program is configured to, when executed by a processor, cause the processor to implement the method of any one of claims 1 to 8.
